# EUROPEAN PATENT APPLICATION

(11) **EP 1 536 383 A1**
(43) Date of publication of application: **01.06.2005**
(21) Application number: 03425755.0
(22) Date of filing: 25.11.2003
(51) Int. Cl.: G07F 7/00, G06F 17/60, G07C 9/00

(54) **System for automatic subscriptions**

(71) Applicant: Video Center di Flisi Mario e C. S.n.c., 46029 Suzzara MN (IT)
(72) Inventor: Flisi, M. Video Center di Flisi Mario e C. s.n.c., 46029 Suzzara MN (IT)
(74) Representative: Papa, Elisabetta

(57) **Abstract**

A system (1) for automatic subscriptions of video rental services, comprising a central unit (2) and remote local units (3, 30, 300) communicating with the central unit (2), wherein each local unit of said plurality comprises a camera (4, 11) for the identifying of a user who is in the local unit (3) by an operator residing in the central unit (2), means (13) for providing to the user a contract (C) to sign, and means (15) for receiving and identifying the signed contract (C) (Figure 1).

## Description

The present invention relates to a system for automatic subscriptions.

In the video cassette and DVD rental and sale field, automatic dispensers are more and more widespread. Such dispensers are typically gathered together in a dedicated room and can be used by a suitable personal subscription card issued by the video rental shop manager. In such rooms, during working hours there usually is an operator issuing the automatic video rental cards to new customers.

The issuance of a new card entails, among other things, identifying the new customer in order to check his/her suitability for the requested rental or sale service (e.g., to check whether a subject is of age or underage) and the signing of a rental contract by the customer him/herself.

The present invention is based on the detection of several relevant drawbacks of the hereto-illustrated video rental modes. First of all, the time of the room operator is usually exploited inefficiently, as the operator is forced to wait for new customers of the automatic rental room, usually providing no service to customers already subscribed.

Hence, the invention is based on the position of a technical problem, and precisely that of providing a technical system capable of automatically or semi-automatically managing new subscriptions, thereby overcoming the drawbacks hereto mentioned with reference to the known art.

This problem is solved by a system according to claim 1.

Preferred features of the present invention are provided for in the dependent claims.

The present invention provides some relevant advantages. The main advantage lies in that the system of the invention makes the making of subscriptions more effective, convenient and safer. In particular, the system enables to manage subscriptions in different automatic rental rooms, even far apart thereamong, with a single operator residing in a remote central unit, rather than by a plurality of operators each residing in a respective rental room. This enables, among other things, to eliminate the dead times of the operator him/herself.

Other advantages, features and the modes of employ of the present invention will be made apparent in the detailed description of some embodiments thereof, given by way of a non-limiting example. Reference will be made to the figures of the annexed drawings, wherein:
Figure 1 shows a schematic assembly view of an embodiment of the system of the present invention;
Figure 2 shows an enlarged detail of the system of Figure 1; and
Figure 3 shows a block diagram of a local unit of the system of Figure 1.

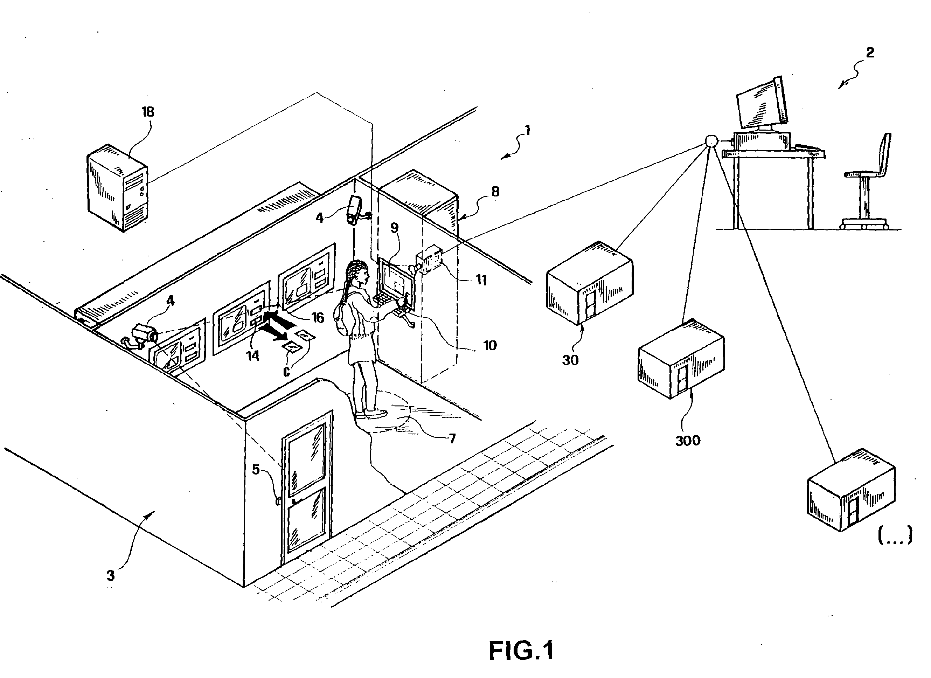

With initial reference to Figure 1, a system for automatic subscriptions according to the invention is generally indicated by 1.

The system 1 comprises a central unit 2 and a plurality of remote local units communicating with the central unit itself. In said Figure 1, by way of example only a few local units have been depicted, three of them indicated by 3, 30 and 300, respectively.

In the present embodiment, each local unit 3, 30, 300 consists of a video rental room.

Hereinafter only the local unit 3 will be described, it being understood that what is described also applies to each of the other local units of system 1.

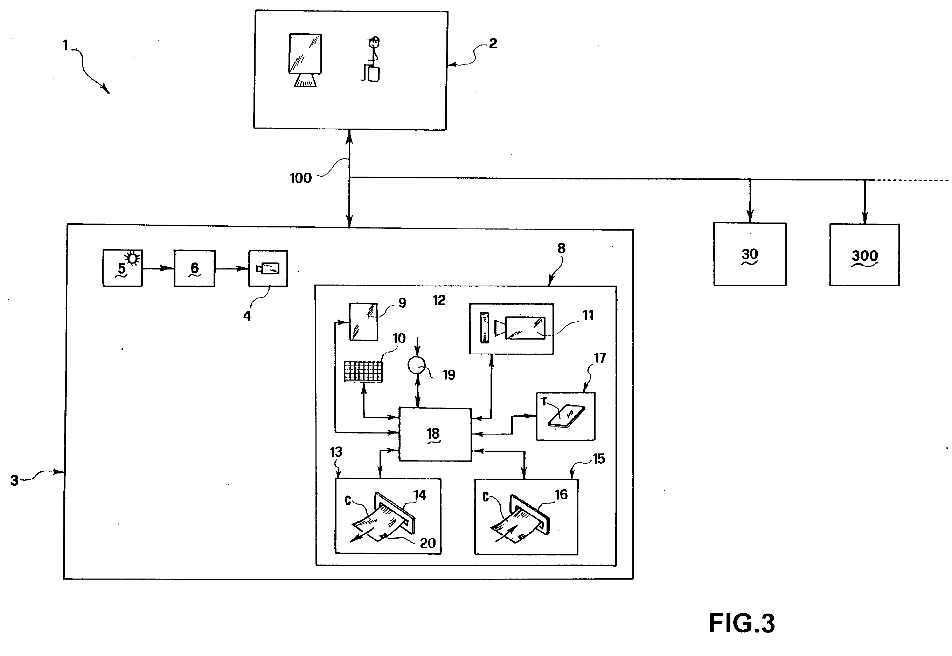

With reference also to Figure 3, the local unit 3 comprises first of all a video-camera 4 communicating with the central unit 2. To the video-camera 4 there are associated means 5 apt to automatically detect a user's presence and means 6 apt to accordingly activate the camera 4 itself. Thus, at a user's entrance in the video rental room, the detecting means 5 detects the user's presence and determines the activation of the video-camera 4 via the means 6.

Said detecting means 5 are implementable by conventional systems, e.g. by optical sensors, and therefore a further description thereof will be omitted.

Preferably, the detecting means 5 is located so as to detect a user's presence in a predetermined zone 7 of the video rental room.

Moreover, in a variant embodiment there may be provided means for vocal guiding the user, that can be operated automatically at a user's entrance in the rental room to guide him/her toward said predetermined zone 7.

In the present embodiment said predetermined zone 7 is a region located adjacently to a user terminal 8 for subscriptions, and it is identified by suitable signs on the floor and/or on the walls.

In a same local unit 3 there may be a plurality of terminals 8 and therefore a corresponding plurality of associated video-cameras 4, predetermined detection zones 7, detecting means 5 and activating means 6. For simplicity's sake, however, in Figures 1 and 3 a single terminal 8 was depicted in detail.

As it is shown in greater detail in Figure 3, in the present embodiment the terminal 8 or each terminal 8 of the local unit 3 mainly comprises:
- a screen 9;
- an alphanumeric keyboard 10;
- a second video-camera 11, separated from the outside environment by a see-through panel 12;
- means 13 for printing and providing a contract C to sign to the user, comprising a dispensing door 14;
- means 15 for receiving and identifying the signed contract, comprising an inlet slot 16;
- means 17 for dispensing a subscription card T; and
- a local processor 18.

Said components of the terminal 8 are interconnected thereamong.

System 1 further comprises means 100 for connecting the hereto-introduced components of the local unit 3 to the central unit 2.

The role of each of the hereto-introduced components and their mutual connections will be better understood with reference to the operation modes of system 1.

As already mentioned hereto, at the entrance in the video rental room a user may be guided, by a vocal message, at the predetermined zone 7 or at one of the predetermined zones 7.

Once the user has positioned him/herself at the zone 7, his/her presence is detected by the detecting means 5, which in turn determines, via the activating means 6, the operation of the video-camera 4.

Owing to such an activating, the local processor 18, which is connectable to the video-camera 4, to the means 5 or 6 or to more than one of these components, causes the user to be provided, by means of the screen 9, with the instructions for applying for the issuance of a new subscription to the video rental service. In particular, the user is requested to press a push button for calling the remote operator. Said push button may be a push button of the alphanumeric keyboard 10, a different dedicated push button 19 or another calling means. Upon operating said push button 19, there might also light up a lamp located at the terminal 8.

The remote operator, by connecting to the video rental room 3, and in particular to the terminal 8 thereof that has forwarded the call, sees the user framed by the video-camera 4.

The operator requests the user, always by means of messages displayed on the screen 9, to provide, via the keyboard 10, the personal data required for the subscription.

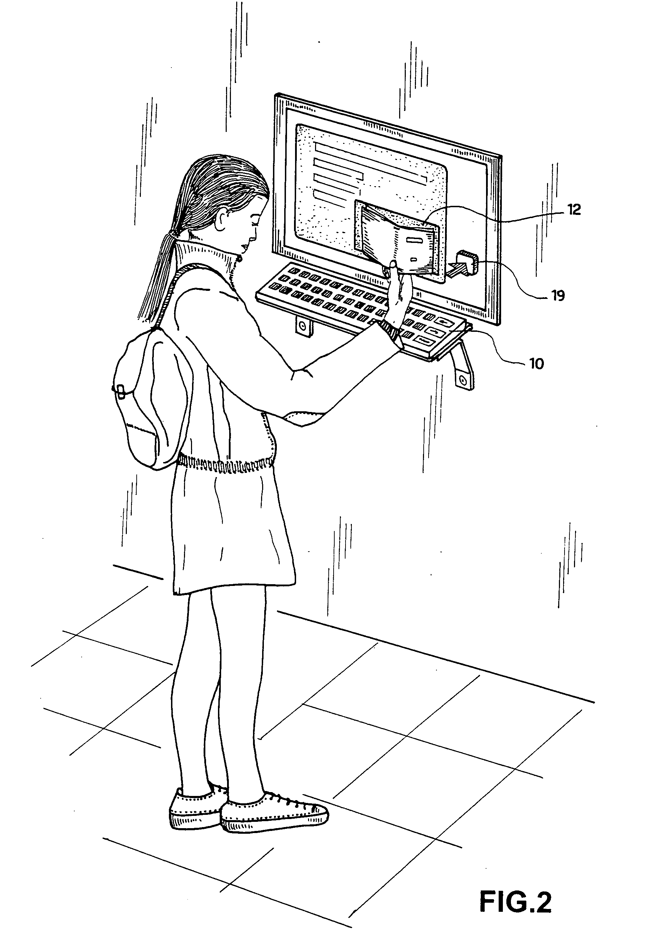

Then, the operator requests the user to lay his/her identity papers onto the see-through panel 12, so that said identity papers may be framed by the second video-camera 11 and then visualised by the operator. This latter step is depicted in greater detail in Figure 2.

It will be understood that, according to a variant embodiment, the hereto-illustrated steps can also be carried out without direct intervention by the operator, with visual messages automatically displayed on the screen 9.

Then, the operator can check whether the user meets the requisites for subscribing, and, in the affirmative case, authorize the printing and the dispensing of the contract C via the means 13. The latter is apt to print onto the contract C also a control code identifying the contract itself, e.g. a bar code 20.

In the negative case, i.e., when the user does not meet the requisites for subscribing, a corresponding message will be provided and the transaction will be terminated.

Upon having been dispensed the contract C, the user, always by means of messages displayed on the screen 9, is requested to read and sign the contract itself and then to insert it in the slot 16 of the means 15 for receiving and identifying the signed contract. The latter means comprises means for detecting said control code, in the present embodiment means for reading the bar code 20.

For clarity's sake, in Figure 1 the steps of dispensing the contract to be signed and of returning the signed contract have been depicted at a terminal different with respect to that used by the depicted user.

According to a variant embodiment, instead of two separate slots 14 and 16 there might be a single opening, both for the dispensing and the inserting of the contract C.

Prior to the inserting of the contract into the slot 16, the operator or an automatic message may request the user to lay the signed contract onto the panel 12, so that the operator may check the actual affixing of the signature.

Then, the operator can control the issuing of the subscription card T via the means 17.

In a variant embodiment, the card T may be directly issued together with the contract C to be signed, yet authorised to the requested services only upon having returned and checked the signed contract.

It will be understood that all the hereto-introduced components of the system 1 and the mutual connections thereof may be implemented by conventional hardware and/or software components, hence a further description thereof will be omitted. For example, the connections between the terminal or terminals 8 and the central unit 2 may be based on conventional phone lines.

The system 1, though described hereto with regard to automatic subscriptions of a video rental contract, is susceptible of being applied also in other fields in which an automatic controlling of local business units and a customer identification be required.

It will be understood that the present invention is susceptible of several embodiments and variants alternative to the hereto-described ones, some of which will be briefly illustrated hereinafter with reference to the sole aspects differentiating them from the hereto-considered embodiments.

First of all, each terminal may provide a display unit differing from the screen 9 or, alternatively to or in association with a display unit, also a one-way or two-way voice communication unit between user and terminal and/or central unit.

Moreover, the cameras, the keyboard and the associated means for connecting to the central unit described hereto implement means for visually identifying a user who is in the local unit by the operator residing in said central unit. Of course, said latter means is susceptible of alternative implementations that may also provide a not-necessarily-visual identifying. Moreover, the means for the identifying may merely consist of the video-camera 11, and it may be provided that the operator, by displaying the user's document, acquire the personal data thereof required for the subscription. In another variant embodiment there may be provided that to the camera 11 there be associated a character recognition system (e.g. of the kind commonly denominated OCR) automatically acquiring the user's personal data from the user's document.

Furthermore, alternatively to the second camera, the terminal or each terminal of one or more of the local units may comprise means for reproducing a user's identity papers, e.g. optical scanning means or a photo camera, and means for transmitting the effected reproduction to the central unit.

Moreover, the terminal or each terminal may also provide means for dispensing to the user an audiovisual device such as a video cassette or a DVD, selected by the user him/herself, or any other product.

Moreover, it is understood that the invention, though hereto described with reference to video rental rooms, also applies to the case of terminals street-located or having a user's interface outside of the shop.

The present invention was hereto described with reference to preferred embodiments thereof. It is understood that there may be other embodiments, afferent to the same inventive kernel, all falling within the protective scope of the appended claims.

## Claims

1. A system (1) for automatic subscriptions, comprising a central unit (2) and a plurality of remote local units (3, 30, 300) communicating with said central unit (2), wherein each local unit of said plurality comprises:
- means (4, 10, 11) for identifying a user who is in said local unit (3) by an operator residing in said central unit (2);
- means (13) for providing a contract (C) to sign to the user; and
- means (15) for receiving and identifying the signed contract (C).

2. The system (1) according to claim 1, wherein said means for identifying a user comprises visual identification means (4, 11) communicating with said central unit (2).

3. The system (1) according to the preceding claim, wherein said visual identification means comprises at least one video-camera (4, 11).

4. The system (1) according to the preceding claim, wherein said visual identification means comprises a video-camera (11) apt to frame a user's identity paper.

5. The system (1) according to claim 3 or 4, wherein said at least one video-camera (11) is inserted in a user terminal (8) of said local unit (3) and separated from the outside environment by a see-through panel (12).

6. The system (1) according to any one of the preceding claims, wherein at least one local unit (3) of said plurality comprises means (5) for automatically detecting a user's presence in said local unit (3) and means (6) for automatically activating said means (4, 10, 11) for identifying a user following said detecting.

7. The system (1) according to any one of the preceding claims, wherein said means (4) for identifying a user is apt to identify a user positioned in a predetermined zone (7) of said local unit (3).

8. The system (1) according to the preceding claim, wherein said means for identifying a user comprises means for requesting the user to position him/herself in said predetermined zone (7).

9. The system (1) according to any one of the preceding claims, wherein said means for identifying a user comprises means (10, 11) for enabling the user him/herself to send personal identification data to said central unit (2).

10. The system (1) according to the preceding claim, wherein said means for identifying a user comprises an alphanumeric keyboard (10).

11. The system (1) according to claim 9 or 10, wherein said means for identifying a user comprises means for reproducing an identity paper of the user his/herself and means for transmitting such reproduction to said central unit (2).

12. The system (1) according to the preceding claim, wherein said means for reproducing comprises optical scanning means.

13. The system (1) according to any one of the preceding claims, wherein each local unit (3) comprises a local processor (18).

14. The system (1) according to any one of the preceding claims, wherein said means (15) for receiving and identifying the signed contract (C) comprises means for reading a control code (20) affixed onto the contract itself.

15. The system (1) according to the preceding claim, wherein said means for reading a control code (20) are means for reading an optical code.

16. The system (1) according to any one of the preceding claims, wherein each local unit (3) of said plurality comprises a plurality of user terminals (8), each comprising respective means (4, 10, 11) for identifying.

17. The system (1) according to any one of the preceding claims, wherein each local unit (3) of said plurality comprises means (9, 10) for communicating between a user and the operator residing in said central unit (2).

18. The system (1) according to the preceding claim, wherein said means for communicating comprises a screen (9).

19. The system (1) according to claim 17 or 18, wherein said means for communicating comprises an alphanumeric keyboard (10).

20. The system (1) according to any one of the claims 17 to 19, wherein said means for communicating comprises means for vocal communicating.

21. The system (1) according to any one of the preceding claims, comprising means (19) for the calling of the operator residing in said central unit (2) by a user in one of said local units (3).

22. The system (1) according to any one of the preceding claims, comprising means (17) for dispensing a subscription card (T) to the user.

23. The system (1) according to any one of the preceding claims, wherein each local unit of said plurality is a video rental station (3).

24. The system (1) according to the preceding claim, comprising means for dispensing to the user an audiovisual device such as a video cassette or a DVD, selected by the user him/herself.
